# EUROPEAN PATENT SPECIFICATION

(11) **EP 2 213 625 B1**
(45) Date of publication and mention of the grant of the patent: **13.11.2013**
(21) Application number: 10150248.2
(22) Date of filing: 07.01.2010
(51) Int. Cl.: C02F 1/461, C25B 9/00

(54) **Electrolysis device**
Elektrolysevorrichtung
Dispositif d'électrolyse

(30) Priority: 16.01.2009 TR 200900349
(43) Date of publication of application: 04.08.2010
(73) Proprietor: Vestel Beyaz Esya Sanayi ve Ticaret A.S., 45030 Manisa (TR)
(72) Inventor: Imir, Can, 45030 Manisa (TR); Turan, Halil, 45030 Manisa (TR)
(74) Representative: Cayli, Hülya

(56) References cited:
- JP-A- 7 031 975
- JP-A- 8 332 486
- JP-A- 2002 224 671
- JP-A- 2004 298 865
- US-A1- 2009 017 174

## Description

### Technical Field

This invention relates to a device which forms acidic and basic water by electrolyzing mains water used in washing machines.

### Prior Art

Currently, there are many devices which enable to form acidic and basic water by passing water through an electrolysis process. In the said devices, the electrodes which function as anodes and the electrodes which function as cathodes are separated from each other by means of structurally different various separators. Examples of various applications of these electrolysis devices having different mechanical designs are given below.

In the state of art, the water electrolysis system described in the patent document numbered US2002027070, comprises an electronic cell, a perforated pipe which enables water entry inside the cell, at least one anode plate extending vertically inside the cell, at least one cathode plate positioned inside the cell in parallel with the anode plate and an outlet pipe which delivers the electrolyzed water out of the cell. The cathode has a perforated structure to permit water passage. A small channel is situated between the anode and the cathode plates. In this system, a precaution which prevents the electrolyzed acidic and the basic water to mix with each other is not present.

In the state of art, the industrial electrolysis washing machine described in the patent application numbered W02004065682 comprises an electrolysis device composed of one anode plate and one cathode plate situated on both sides of the ion exchange membrane. The anode and cathode is structured as a plate in order to increase the contact surface whereby the efficiency of the electrolysis is also increased. This invention is not favourable as its production is complex and costly and also as it occupies a lot of space.

The patent application JP 8 332486A describes a compact electrolysis apparatus with a plurality of electrolysis cells in which plate like electrodes sandwich two spacers and a barrier membrane. The water to be treated is distributed by a pipe to the feed ports of the parallel cells. The spacers allow a meander-type flow of the fluid under treatment.

In the state of art, the system described in the patent application numbered US6126796 comprises an electrolytic cell. Ion exchange membrane between the anode and cathode is present in the system which comprises a power supply that supplies electricity to the anode and cathode. The hydrochloric acid is added to the anode via membrane whereby the catholyte and the anolyte remains acidic. In this system only acidic water is obtained and there is a need to add hydrochloric acid to the system.

The electrolysis device of claim 1 which is the subject of the invention and the details of which are described below comprises a lower cap, an upper cap, at least two diffuser and electrolysis cells. An electrolysis cell comprises two cartridges situated between at least two electrodes located at the outermost and which function as an anode and a cathode respectively and a separator located at the midmost which solely permits ion exchange. Cells are arranged in such a way that the cartridges and the separator of the other cells are placed next to the electrode located at the outermost. In this way, while the surface of one electrode functions as an anode, it functions as a cathode for the cell located at the other surface. The mains water is delivered to the electrolysis cell through a hole perforated on the side surface of the lower cap. The even distribution of the mains water through the electrolysis cells is enabled by two structurally different diffusers located between the water entry hole and the electrolysis cell. The mains water, which is separated as acidic and basic water by being passed through an electrolysis cell, passes through the exit holes located on any of the side surfaces of the lower cap. In this way, the electrolysis process is completed. The electrolysis cells are fixed horizontally by fixing together the lower cap and the upper cap with screws. The protrusions located at the lower cap wherein the diffuser is arranged form the lower base for the electrolysis cells and thus enable the cells to be fixed vertically.

### Brief Description of the Invention

The electrolysis device which is used to separate mains water used in washing machines into acidic and basic water by means of electrolysis comprises an upper cap having sides which form a channel at the mid section of the inner surface and which has installation holes on the upper surface of the sides; a slot which has sides that form a channel in the mid section of the inner surface, installation holes on its sides which are formed so as to correspond with the installation holes located on the upper cap, formed such that it enters a certain length inside the wall thickness of the two opposite sides at one end of the channel; a ridge like step which extends along the side located between the slot and the side of the channel; a water entry hole located at the side wall of the step; a lower cap comprising the acidic water exit hole and the basic water exit hole formed at the lateral side of the other end of the channel; a diffuser having a width that permits installation to the slot located on the lower cap and comprising two plates, one with a grid structure and the other with a perforated structure on their mid sections, which form a basin the base of which functions as a step between the tip of the channel when installed to the slot; electrolysis cells arranged vertically to the diffuser and parallel to the lateral sides of the channel.

The electrolysis cell comprises two plate shaped electrodes facing each other on the outermost section; an acidic water exit hole and a basic water exit hole in plate form and perforated structure which are positioned such that they correspond to the surfaces of the electrodes facing each other, which have a mid section separated with columns, which are perforated separately from each other at one end such that one is slightly higher than the other horizontally and vertically; a discharge channel which extends, on the corresponding surfaces, from the hole to the acidic water exit hole on one and from the hole to the basic water exit hole on the other; tie pieces which are formed, excluding the circumference of the discharge channel, around the acidic and basic water exit holes that have discharge channels and which ensure that the channelled perforations are firmly tied to the unchanneled perforations by fixing the channelled perforations to the unchanneled perforations; acidic and basic cartridges having drain channels opening into the inner surface of the last column located at the other end of the plate; a separator which prevents mixing of acidic and basic water between the acidic and basic cartridges while allowing ion exchange. Cells are placed such that the cartridge and the separator of the other cell are next to the outermost electrode. In this way, an electrode functions as an anode for a cell present on one of its surface and functions as a cathode for a cell present on its other surface.

### The Object of the Invention

The object of the invention is to obtain acidic and basic water by electrolyzing mains water.

Another object of the invention is to obtain the desired voltage in each electrolysis cell by changing the number of the electrolysis cells without using any voltage adjustment device.

Yet another object of the invention is to ensure separation of acidic and basic water by preventing them to be mixed with each other.

### Description of the Figures

The exemplary applications regarding the electrolysis device of the invention is shown in the attached figures, wherein;
Figure 1 - is a top perspective view of the assembled electrolysis device.
Figure 2 - is a top perspective view of the disassembled lower cap and the upper cap of the electrolysis device.
Figure 3 - is a perspective view of the electrolysis cells and the lay-out of the diffuser inside the lower cap.
Figure 4 - is a top perspective view of the electrolysis cells and the lay-out of the diffuser inside the lower cap.
Figure 5 - is a perspective view of the disassembled state of the electrolysis cell.
Figure 6 - is a front perspective view of the disassembled state of the diffuser.
Figure 7 - is a front perspective view of the cartridge designs.
Figure 8 - is a view of the assembly parts of the electrolysis device.

The parts in the figures are numbered one by one and their corresponding references are given below.
Electrolysis device (A)
Lower cap (1)
Upper cap (2)
Water entry hole (3)
Acidic water exit hole (4)
Basic water exit hole (5)
Basin (6)
Diffuser (7)
Acidic section cartridge (8)
Basic section cartridge (9)
Separator ion film (10)
Electrode (12)
Acidic water exit hole (13)
Basic water exit hole (14)
Discharge channel (15)
Drainage (17)
Step (18)
Assembly hole (20)
Slot (21)
Electric connection channel (22)
Electrolysis cell (23)
Flap (24)
Assembly hole (25)
Cap edge (26, 26')
Inner surface (27, 27')
Channel (28, 28')
Cartridge hole (29)
Router plate (71)
Gap (71 a)
Strainer plate (73)
Column (74)
Tie piece (80)

### Description of the Invention

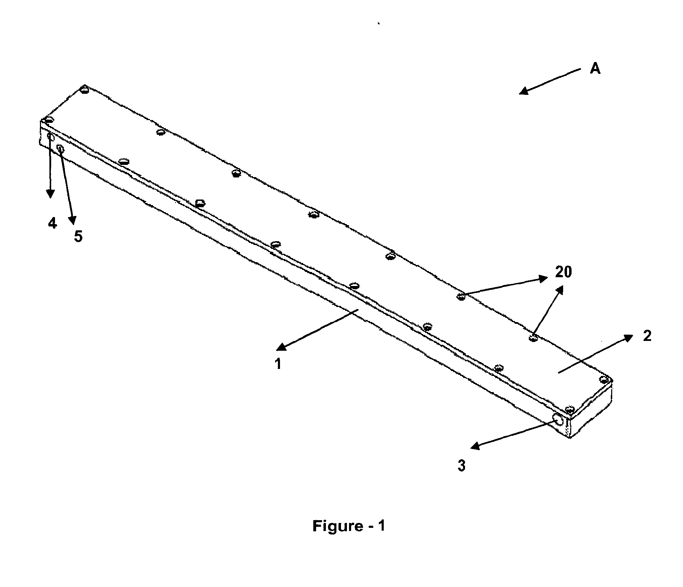

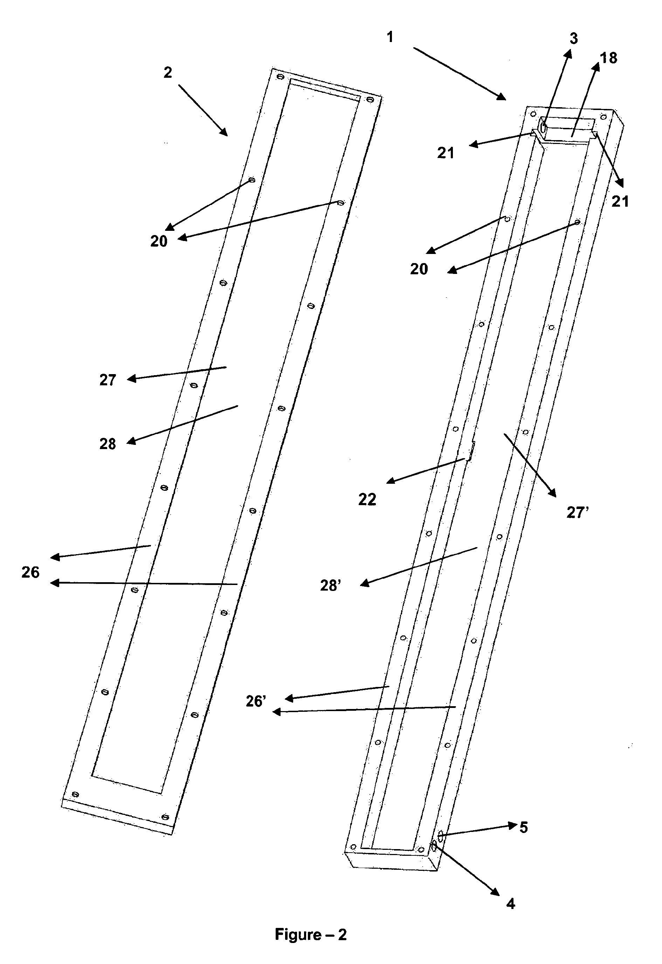

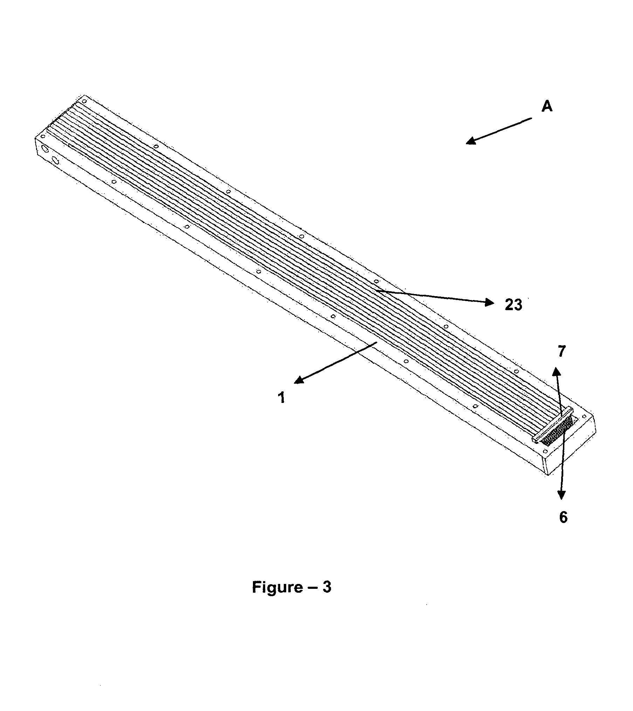

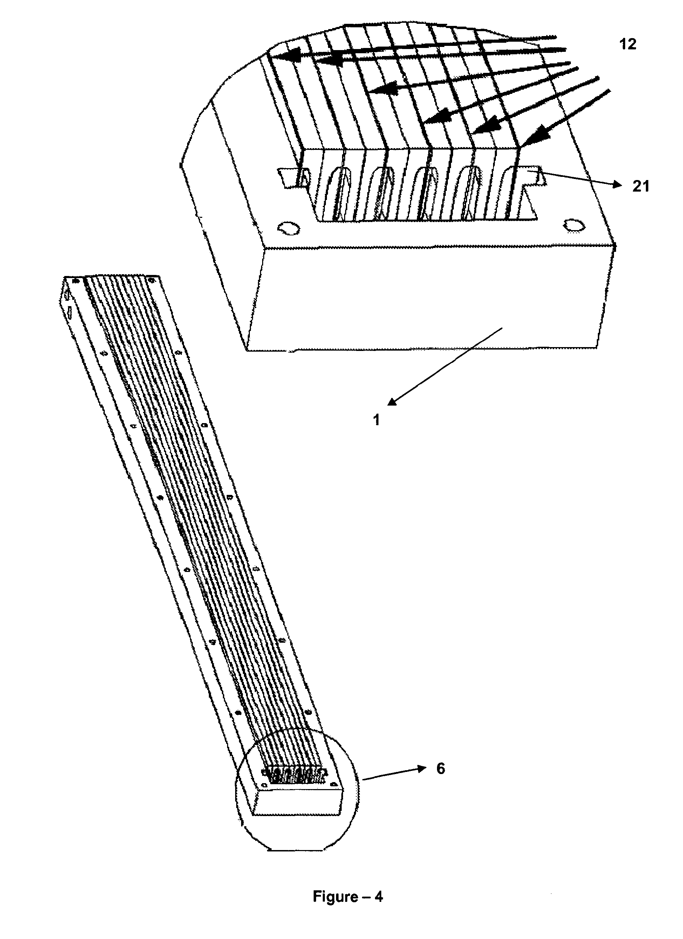

The top perspective views of the lower cap (1) and the upper cap (2) of the electrolysis device (A) are shown in figure 1 in an assembled state and in a disassembled state in Figure 2. Figure 3 and Figure 4 show top perspective views of the assembled state of the electrolysis cells (23) and the diffuser (7). The electrolysis device (A) shown in figures 1-4, which is the subject of the invention and which is utilized to separate mains water used in washing machines into acidic and basic water by means of electrolysis, comprises a lower cap (1), an upper cap (2), at least one diffuser (7) and electrolysis cells (23). In the electrolysis device (A) there is an upper cap (2) which has sides (26) that form a channel (28) at the mid section of the inner surface (27) and which has installation holes (20) on the upper surface of the sides (26); and a lower cap (1) which has sides (26') that form a channel (28') at the mid section of the inner surface (27'), which is provided with installation holes (20) on its sides being formed so as to correspond with the installation holes (20) located on the upper cap (2), which comprises a slot (21) being formed at one end of the channel (28') such that it enters a certain length inside the wall thickness of the two opposite sides (26'), a ridge like step (18) extending along the side (26') and being located between the slot (21) and the side of the channel (26'), a water entry hole (3) located at the side wall of the step (18), an acidic water exit hole (4) and a basic water exit hole (5) being formed at the lateral side (26') of the other end of the channel (28') and a channel (22) being reserved in order to connect electricity to the electrode which protrudes from the side of the channel (26') towards the inner surface (27').

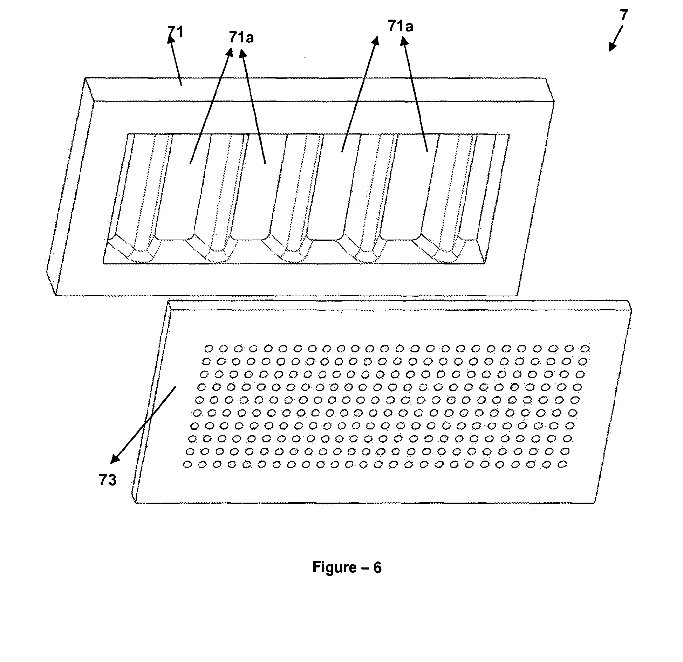

Furthermore, the device comprises a diffuser (7) (shown in figure 6) having a width that permits installation to the slot (21) located on the lower cap (1) and comprising a router plate (71) and a strainer plate (73), one with a grid structure and the other with a perforated structure on their mid sections, which form a basin (6) (shown in figure 3-4) the base of which functions as a step (18) between the tip of the channel (28') when installed to the slot (21) and electrolysis cells (23) which are arranged vertically to the diffuser and parallel to the lateral sides of the channel. On the router plate (71) there are a number of gaps (71 a) corresponding to the number of cells (23). The water passing through these gaps (71 a) are distributed to the cells (23). A multiple-hole strainer plate (73) is located in front and/or behind the router plate (71) and filtration of water from solid particles is ensured.

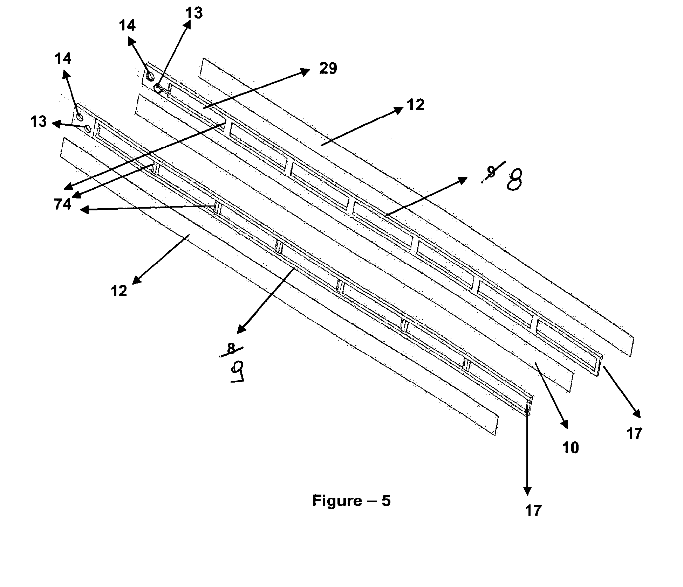

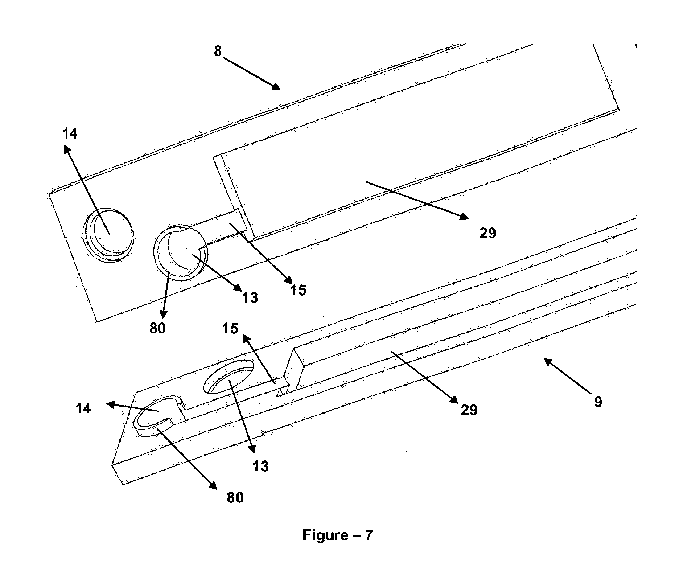

The electrolysis cell (23), the top perspective view of its disassembled state is shown in Figure 5, comprises two plate shaped electrodes (12) facing each other on the outermost section; an acidic water exit hole (13) and a basic water exit hole (14) in plate form and perforated structure which are positioned such that they correspond to the surfaces of the electrodes (12) facing each other, which are perforated separately at one end and which have a mid section separated with columns (74); a discharge channel (15) (shown in figure 7) which extends, on the corresponding surfaces, from the hole (29) to the acidic water exit hole (13) on one and from the hole (29) to the basic water exit hole (14) on the other, tie pieces (80) (shown in figure 7) which are formed, excluding the circumference of the discharge channel, around the acidic and basic water exit holes that have discharge channels (13, 14) (15) and which ensure that the channelled perforations (13, 14) are firmly tied to the unchanneled perforations (13, 14) by fixing the channelled perforations to the unchanneled perforations; acidic and basic cartridges (8, 9) having drain channels (17) opening into the inner surface of the last column (74) located at the other end of the plate; a separator ion film (10) which prevents mixing of acidic and basic water between the acidic and basic cartridges (8, 9) while allowing ion exchange. Cells (23) are placed such that the cartridges (8, 9) of the other cell and the separator ion film (10) are next to the outermost electrode (12). In this way, an electrode (12) functions as an anode for a cell present on one of its surface and functions as a cathode for a cell present on its other surface. The separator ion film (10) and the electrodes (12) are joined together such that they do not occlude the acidic and basic water exit holes (13, 14) located on the cartridges (8, 9).

As shown in figure 3 and 4, at least one electrolysis cell (23) is placed on the lower cap (1) such that it is parallel to the lateral sides (26') of the cap (1) and the diffuser (7) is fixed to the slot (21) perpendicularly to these (23). The depth of the basin (6) which is formed between the diffuser (7) and the cap side (26') is lower in comparison with the depth of the slot (21). The water delivered from the entry hole (3) accumulates in the basin (6). After the mains water passes to the device (A) through the entry hole (3), it is appropriately distributed to the electrolysis cells (23) by going through the diffuser (7).

The electrical feed to the electrolysis cell (23), composed of two electrodes (12) located at the outermost, two cartridges (8, 9) placed between the electrodes (12) and a separator ion film (10) located at the mid most, is provided by a direct current source in desired voltages by means of the cables which are passed through the channels (22) below the lower cap (1) to at least one electrode (12) located at the outermost. Apart from the discharge channel (15) circumference, the circumference of the acidic water exit hole (13) has tie piece structure. This tie piece structure (80) ensures that the two cartridges (8, 9) do not break apart from each other by fitting firmly on the acidic water exit hole (13) located on the other cartridge (9). In the same way, apart from the channel (15) path, the circumference of the basic water exit hole (14) has tie piece (80) structure and the said tie piece (80) ensures that the two cartridges do not break apart from each other by fitting firmly on the exit hole (14) of the acidic section cartridge (8). Columns (74) are formed along the cartridge in order to reinforce the cartridges (8, 9). The water delivered from the diffuser (7) is passed through the drain channels (17) which are formed on the last column in order to facilitate water passage along the cartridges (8, 9). One of the electrodes (12), which are located at the outermost of the electrolysis cells formed from an acidic and a basic cartridge (8, 9) and which are placed on the electrolysis device (A) in desired quantities, is positively charged and thus functions as an anode while the other is negatively charged and thus functions as a cathode. The separator ion film (10) permits ion exchange and prevents acidic and basic water from mixing with each other between the acidic (8) and basic (9) cartridges. The water, which is electrolyzed by giving an electrical current, passes from the electrode (12) to the cartridge (8, 9), from the cartridge (8, 9) to the separator ion film (10), from the separator ion film (10) to the cartridge (8, 9) and from here to the discharge channel (15) by guidance of the discharge channel (15) and from the discharge channel it reaches the exit holes (13, 14). The acidic and basic water obtained from each cell (23) is discharged by being accumulated inside the exit holes (13, 14).

If the electrolysis cell (23) is fed, for example, with 200 Volt DC, the voltage passes from one electrode (12) to the other by evenly decreasing manner in a 5 cell system comprised of 5 acidic (8) and 5 basic cartridges (9). In a 5 cell system there are 6 electrodes and the voltage formed in these are, respectively, 200, 160, 120, 80, 40 and 0. In this way, 5 electrolysis cells with 40 volt tension are obtained. In this way, the electrolysis device can be operated in desired voltages by changing the number of cells without having to use a transformer. The voltage per cell can be adjusted by changing number of cells without changing the current value. Thus, the desired performance is achieved.

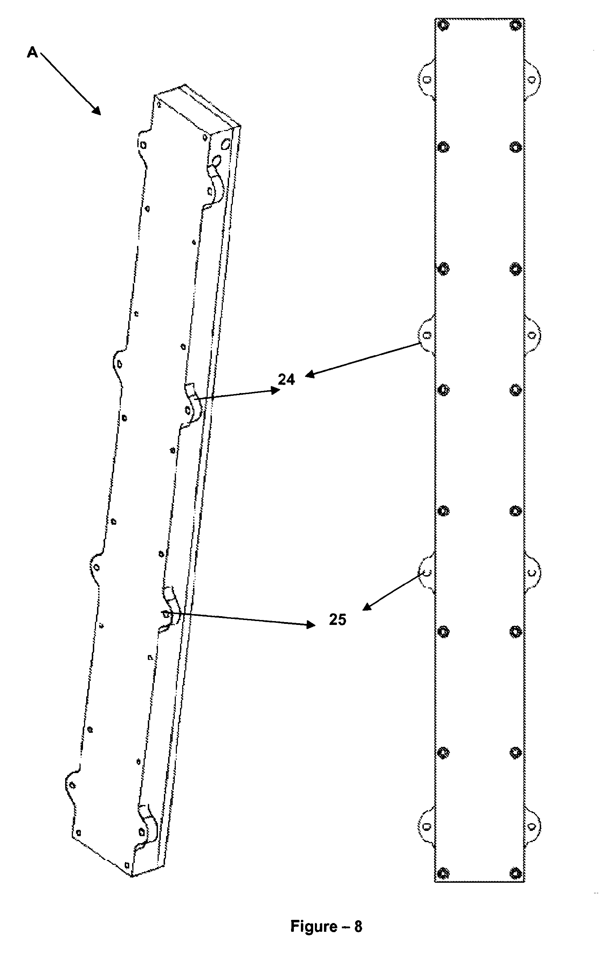

Figure 8 shows the flaps (24) which are formed in order to enable the electrolysis cell to be assembled to a washing machine. The assembly is completed by inserting bolts through the installation holes (25) that are located on the flaps (24) formed on the lower and upper caps (1, 2).

## Claims

1. A electrolysis device (A), which is utilized to separate acidic and basic water by electrolyzing mains water used in washing machines, comprising a lower cap (1),
an upper cap (2),
electrolysis cells (23), each comprising
- two plate shaped electrodes (12) facing each other and located at the outermost section
- an acidic cartridge (8) and a basic cartridge (9), which are located between the two electrodes (12);
- a separator (10) located between the cartridges (8, 9) which prevents mixing of acidic and basic between the acidic and a basic cartridges (8,9) while allowing ion exchange;
- each acidic and basic cartridge has holes (29) separated by columns (74), each cartridge having an acidic water exit hole (13) and a basic water exit hole (14) at the opposite end of the mains water entry,
each acidic cartridge (8) having a discharge channel (15) which extend from a hole (29) to the acidic water exit hole (13) on the surface facing the separator and each basic cartridge (9) having a discharge channel (15) which extend from a hole (29) to the basic water exit hole (14) on the surface at the other side of the separator (10)
- tie pieces (80) which are located on the circumference of the acidic and basic water exit hole holes (13,14) connected to each of the channels (15) present on the corresponding cartridges (8, 9) and which are inserted to the corresponding holes (13, 14);
a diffuser (7) having a router plate (71) which has a number of gaps (71 a) corresponding to the number of cells (23) in order to ensure the distribution of mains water to the cells (23)
**characterized in that**
the upper cap (2) has sides (26) that form a a channel (28) at the mid section of the inner surface (27) of the upper cap (2),
the lower cap (1) has sides (26') that form a channel (28') at the mid section of the inner surface (27'), a slot (21) formed at one end of the channel (28') such that it enters a certain length inside the wall thickness of the two opposite sides (26'); a ridge like step (18) which extends along the side (26') located between the slot (21) and the side of the channel (26'); a water entry hole (3) located at the side wall of the step (18); an acidic water exit hole (4) and a basic water exit hole (5) formed at the lateral side (26') of the other end of the channel (28') and a channel (22) reserved in order to connect electricity to the electrode which is recessed towards the inner surface (27') from the side of the channel (26'):
and **in that** the electrolysis cells (23) are parallel to the lateral sides (26') of the lower cap (1) and the diffuse (7) is fixed to the slot (21) perpendicularly to these cells (23);
and **In that** the electrolysis cells (23) are placed in such a way that the surfaces of one electrode (12) function as anode for the cell facing one surface and as cathode for the cell lacing the other surface.

2. An electrolysis device (A) according to claim 1 **characterized in that** each cartridge (8, 9) comprises drainage channels (17) located on the inner surface of the last column (74).

3. An electrolysis device (A) according to claim 1 **characterized in that** the diffuser (7) comprises a multiple-hole strainer plate (73) in front and/or behind the router plate (71).

## Patentansprüche

1. Elektrolysevorrichtung (A) zum Separieren von acidischem und basischem Wasser durch Elektrolyse von in Waschmaschinen genutztem Leitungswasser, umfassend eine untere Kappe (1),
eine obere Kappe (2),
Elektrolysezellen (23), jeweils umfassend
- zwei plattenförmige einander gegenüberliegende Elektroden (12), die in dem äußersten Abschnitt angeordnet sind,
- einen acidischen Einsatz (8) und einen basischen Einsatz (9), die zwischen den beiden Elektroden (12) angeordnet sind,
- einen Separator (10), der zwischen den Einsätzen (8, 9) angeordnet ist und der ein Mischen von acidischen und basischen Komponenten zwischen dem acidischen und einem basischen Einsatz (8, 9) verhindert, während ein Ionenaustausch ermöglicht wird,
- wobei der acidische sowie der basische Einsatz jeweils Öffnungen (29) besitzen, separiert durch Pfeiler (74), wobei jeder Einsatz eine Ausgangsöffnung (13) für acidisches Wasser und eine Ausgangsöffnung (14) für basisches Wasser an dem gegenüberliegenden Ende des Leitungswassereingangs besitzt,
wobei jeder acidische Einsatz (8) einen Ausgangsdurchlass (15) besitzt, der sich von einer Öffnung (29) zur Ausgangsöffnung (13) für acidisches Wasser auf der dem Separator gegenüberliegenden Flache besitzt, und jeder basische Einsatz (9) einen Auslassdurchlass (15) besitzt, der sich von einer Öffnung (29) zur Ausgangsöffnung (14) für basisches Wasser auf der Fläche der anderen Seite des Separators (10) erstreckt.
- Verbindungsstücke (80), die an dem Umfang der Ausgangsöffnungen (13, 14) für acidisches und basisches Wasser angeordnet und mit jedem der Kanäle (15) verbunden sind, die an den entsprechenden Einsätzen (8, 9) vorliegen, und die in die entsprechenden Öffnungen (13,14) eingesetzt sind,
einen Diffusor (7) mit einer Verbindungsplatte (71), die eine Anzahl von Spalten (71 a) entsprechend der Anzahl von Zellen (23) besitzt, um die Verteilung von Leitungswasser zu den Zellen (23) sicher zu stellen,
**dadurch gekennzeichnet, dass**
die obere Kappe (2) Seiten (26) besitzt, die einen Durchlass (28) in dem mittleren Abschnitt der inneren Fläche (27) der oberen Kappe (2) ausbilden,
die untere Kappe (1) Seiten (26'), die einen Durchlass (28') in dem mittleren Abschnitt der inneren Fläche (27') ausbilden, einen Schlitz (21) ausgebildet an einem Ende des Durchlasses (28'), sodass er auf den beiden gegenüberliegenden Seiten (26') um eine gewisse Länge in das Innere der Wandstärke eindringt, eine kantenartige Stufe (28), die sich entlang der Seite (26') angeordnet zwischen dem Schlitz (21) und der Seite des Durchlasses (26') erstreckt, eine Wassereingangsöffnung (3) angeordnet an der Seitenwand der Stufe (18), eine Ausgangsöffnung (4) für acidisches Wasser sowie eine Ausgangsöffnung (5) für basisches Wasser ausgebildet an den lateralen Seiten (26') des anderen Endes des Durchgangs (28), und ein Durchlass (22) belegt um einen elektrischen Anschluss mit der Elektrode zu verbinden, die unterhalb der inneren Fläche (27') von der Seite des Durchlasses (26') vertieft ist, besitzt, und dass die Elektrolysezellen (23) parallel zu den lateralen Seiten (26') der unteren Kappe (1) sind, und der Diffusor (7) zu diesen Zellen (23) senkrecht an dem Schlitz (21) befestigt ist,
und dass die Elektrolysezellen (23) derart angeordnet sind, dass die Flächen einer Elektrode (12) als Anode für die dieser Fläche gegenüberliegende Zelle dienen und als Kathode für die der anderen Fläche gegenüberliegende Zelle dienen.

2. Elektrolysevorrichtung (A) nach Anspruch 1, **dadurch gekennzeichnet, dass** jeder Einsatz (8, 9) Drainagedurchlässe (17) umfasst, die an der Innenfläche des letzten Feilers (74) angeordnet sind.

3. Elektrolysevorrichtung (A) nach Anspruch 1, **dadurch gekennzeichnet, dass** der Diffusor (7) eine Siebplatte(73) mit zahlreichen Öffnungen vor und/oder hinter der Verteilerplatte (71) umfasst.

## Revendications

1. Dispositif d'électrolyse (A), qui est utilisé pour séparer l'eau acide et basique par électrolyse d'eau courante utilisée dans des machines à laver, comprenant
un capuchon inférieur (1),
un capuchon supérieur (2),
des cellules d'électrolyse (23), chacune comprenant
- deux électrodes en forme de plaque (12) se faisant face et positionnées au niveau de la section la plus extérieure
- une cartouche acide (8) et une cartouche basique (9), qui sont positionnées entre les deux électrodes (12) ;
- un séparateur (10) positionné entre les cartouches (8, 9), qui empêche un mélange d'acide et de basique entre les cartouches acide et basique (8, 9) tout en permettant un échange d'ions ;
- chaque cartouche acide et basique a des trous (29) séparés par des colonnes (74), chaque cartouche ayant un orifice de sortie d'eau acide (13) et un orifice de sortie d'eau basique (14) à l'extrémité opposée de l'entrée d'eau courante,
chaque cartouche acide (8) ayant un canal d'évacuation (15) qui s'étend d'un trou (29) à l'orifice de sortie d'eau acide (13) sur la surface faisant face au séparateur et chaque cartouche basique (9) ayant un canal d'évacuation (15) qui s'étend d'un trou (29) à l'orifice de sortie d'eau basique (14) sur la surface au niveau de l'autre côté du séparateur (10)
- des tirants (80) qui sont positionnés sur la circonférence des orifices de sortie d'eau acide et basique (13, 14) connectés à chacun des canaux (15) présents sur les cartouches correspondantes (8, 9) et qui sont insérés dans les orifices correspondants (13, 14) ;
un diffuseur (7) ayant une plaque de distribution (71) qui a un nombre d'interstices (71 a) correspondant au nombre de cellules (23) de manière à garantir la distribution d'eau courante aux cellules (23)
**caractérisé en ce que**
le capuchon supérieur (2) a des côtés (26) qui forment un canal (28) au niveau de la section centrale de la surface intérieure (27) du capuchon supérieur (2),
le capuchon inférieur (1) a des côtés (26') qui forment un canal (28') au niveau de la section centrale de la surface intérieure (27'), une fente (21) formée à une extrémité du canal (28') de manière qu'elle pénètre d'une certaine longueur à l'intérieur de l'épaisseur de paroi des deux côtés opposés (26') ; un échelon de type crête (18) qui s'étend le long du côté (26') situé entre la fente (21) et le côté du canal (26') ; un orifice d'entrée d'eau (3) situé au niveau de la paroi latérale de l'échelon (18) ; un orifice de sortie d'eau acide (4) et un orifice de sortie d'eau basique (5) formés au niveau du côté latéral (26') de l'autre extrémité du canal (28') et un canal (22) réservé de manière à connecter l'électricité à l'électrode, qui est évidé vers la surface intérieure (27') à partir du côté du canal (26') ;
et **en ce que** les cellules d'électrolyse (23) sont parallèles aux côtés latéraux (26') du capuchon inférieur (1) et le diffuseur (7) est fixé à la fente (21) perpendiculairement à ces cellules (23) ;
et **en ce que** les cellules d'électrolyse (23) sont placées de telle manière que les surfaces d'une électrode (12) fonctionnent comme une anode pour la cellule faisant face à une surface et comme une cathode pour la cellule faisant face à l'autre surface.

2. Dispositif d'électrolyse (A) selon la revendication 1, **caractérisé en ce que** chaque cartouche (8, 9) comprend des canaux d'écoulement (17) situés sur la surface intérieure de la dernière colonne (74).

3. Dispositif d'électrolyse (A) selon la revendication 1, **caractérisé en ce que** le diffuseur (7) comprend une plaque de filtrage à trous multiples (73) devant et/ou derrière la plaque de distribution (71).
